# EUROPEAN PATENT APPLICATION

(11) **EP 4 325 922 A1**
(43) Date of publication of application: **21.02.2024**
(21) Application number: 22788032.5
(22) Date of filing: 29.03.2022
(51) Int. Cl.: H04W 16/28, H04W 72/04

(54) **TERMINAL, WIRELESS COMMUNICATION METHOD, AND BASE STATION**

(30) Priority: 15.04.2021 JP 2021068792
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/015529
(87) International publication number: WO 2022/220107

(57) **Abstract**

To appropriately perform beam failure detection or beam failure recovery even when a plurality of transmission/reception points are used. A terminal according to one aspect of the present disclosure includes: a receiving section that receives information related to the number of uplink control channel resources for a scheduling request (SR) to be used for a beam failure recovery request; and a control section that determines an uplink control channel resource for the SR to be used for the beam failure recovery request, based on the information and a spatial relation corresponding to the uplink control channel resource for the SR.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (LTE Rel. 8 to Rel. 15), monitoring of radio link quality (radio link monitoring (RLM)) is performed. When a radio link failure (RLF) is detected through RLM, reestablishment of RRC (Radio Resource Control) connection is requested to a user terminal (User Equipment (UE)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR (e.g., Rel. 15/16), it is studied to perform a procedure for detecting a beam failure and switching to another beam (which may be referred to as a beam failure recovery (BFR) procedure, BFR, link recovery procedures, and the like).

It is also assumed that, in future radio communication systems (e.g., Rel. 17 or later versions, Beyond 5G or later versions, or 6G or later versions), a terminal (UE) uses a plurality of transmission/reception points (TRPs) / UE panels to perform communication. In this case, it is conceivable to perform beam management (e.g., beam failure detection) in a plurality of TRPs / a plurality of UE panels.

However, this leads to a problem of how to control beam failure detection (BFD) or beam failure recovery (BFR) in each TRP / UE panel. Unless beam failure detection or beam failure recovery in each TRP / UE panel is appropriately controlled, communication throughput may be reduced or communication quality may be deteriorated.

The present disclosure has been made in view of the above respect, and an object of the present disclosure is to provide a terminal, a radio communication method, and a base station that allow beam failure detection or beam failure recovery to be performed appropriately even when a plurality of transmission/reception points are used.

### Solution to Problem

A terminal according to one aspect of the present disclosure includes: a receiving section that receives information related to the number of uplink control channel resources for a scheduling request (SR) to be used for a beam failure recovery request; and a control section that determines an uplink control channel resource for the SR to be used for the beam failure recovery request, based on the information and a spatial relation corresponding to the uplink control channel resource for the SR.

### Advantageous Effects of Invention

According to one aspect of the present disclosure, it is possible to appropriately perform beam failure detection or beam failure recovery even when a plurality of transmission/reception points are used.

### Brief Description of Drawings

FIG. 1 is a diagram to show an example of a beam recovery procedure in Rel-15 NR;
FIG. 2 is a diagram to show an example of a beam recovery procedure in Rel-16 NR;
FIG. 3A to FIG. 3D are diagrams to show examples of a configuration of a PUCCH resource(s) and a spatial relation(s) for a scheduling request;
FIG. 4A and FIG. 4B are diagrams to show examples of a PUCCH-SR resource used for transmission of an SR for BFR when BFR on a per TRP basis is employed;
FIGS. 5A and 5B are diagrams to show examples of a spatial relation configured for a PUCCH-SR resource according to a first aspect;
FIG. 6 is a diagram to show an example of spatial relations configured for a PUCCH-SR resource according to a second aspect;
FIG. 7 is a diagram to show another example of spatial relations configured for a PUCCH-SR resource according to the second aspect;
FIG. 8 is a diagram to show an example of a schematic structure of a radio communication system according to one embodiment;
FIG. 9 is a diagram to show an example of a structure of a base station according to one embodiment;
FIG. 10 is a diagram to show an example of a structure of a user terminal according to one embodiment; and
FIG. 11 is a diagram to show an example of a hardware structure of the base station and the user terminal according to one embodiment.

### Description of Embodiments

### (Beam Failure Detection)

In NR, communication is performed by employing beam forming. For example, a UE and a base station (e.g., a gNB (gNodeB)) may use a beam used for transmission of a signal (also referred to as a transmit beam, a Tx beam, and the like) and a beam used for reception of a signal (also referred to as a receive beam, an Rx beam, and the like).

In a case of employing beamforming, it is likely to be affected by block by an obstacle and hence assumed that radio link quality deteriorates. Such deterioration of radio link quality may frequently cause a radio link failure (RLF). When an RLF occurs, cell reconnection is needed. Hence, frequent occurrence of an RLF leads to degradation of system throughput.

In NR, to suppress the occurrence of an RLF, when the quality of a specific beam deteriorates, a procedure for switching to another beam (which may be referred to as beam recovery (BR), beam failure recovery (BFR), L1/L2 (Layer 1 / Layer 2) beam recovery, and the like) is performed. Note that the BFR procedure may be referred to simply as BFR.

Note that a beam failure (BF) in the present disclosure may be referred to as a link failure.

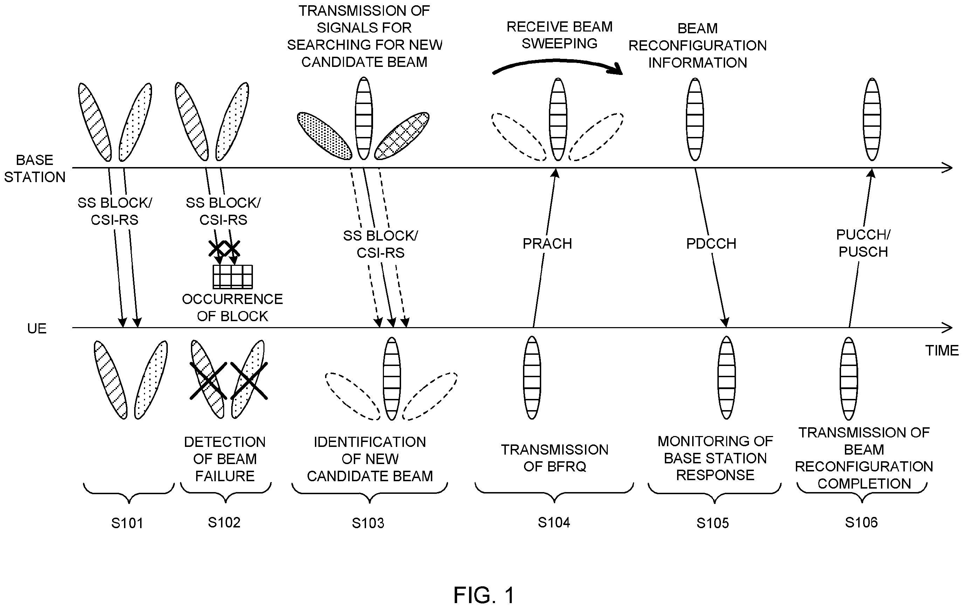

FIG. 1 is a diagram to show an example of a beam recovery procedure in Rel-15 NR. The number of beams is an example and is not restrictive. In an initial state (step S101) in FIG. 1, a UE performs measurement, based on reference signal (RS) resources transmitted by using two beams.

The RS may be at least one of a synchronization signal block (SSB) and an RS for channel state measurement (Channel State Information RS (CSI-RS). Note that the SSB may be referred to as an SS/PBCH (Physical Broadcast Channel) block and the like.

The RS may be at least one of a primary synchronization signal (Primary SS (PSS)), a secondary synchronization signal (Secondary SS (SSS)), a mobility reference signal (Mobility RS (MRS)), a signal included in an SSB, an SSB, a CSI-RS, a reference signal for demodulation (DeModulation Reference Signal (DMRS)), a beam-specific signal, and the like, or a signal configured by, for example, enhancing or changing any of these. The RS measured in step S101 may be referred to as an RS for beam failure detection (Beam Failure Detection RS (BFD-RS), an RS for beam failure detection), an RS to be used for a beam recovery procedure (BFR-RS), and the like.

In step S102, due to radio waves from a base station being blocked, the UE cannot detect BFD-RSs (or reception qualities of the RSs deteriorates). Such block may occur due to an influence of an obstacle, fading, interference, and the like between the UE and the base station, for example,

When a certain condition is satisfied, the UE detects a beam failure. The UE may detect the occurrence of a beam failure when a BLER (Block Error Rate) is lower than a threshold for each of all configured BFD-RSs (BFD-RS resource configurations), for example. When the occurrence of a beam failure is detected, a lower layer (physical (PHY) layer) of the UE may notify (indicate) a higher layer (MAC layer) of a beam failure instance.

Note that a criterion (criteria) for determination may be a reference signal received power in the physical layer (Layer 1 Reference Signal Received Power (L1-RSRP)) without being limited to the BLER. Moreover, instead of RS measurement, or in addition to RS measurement, beam failure detection may be performed based on a downlink control channel (Physical Downlink Control Channel (PDCCH)) and the like. The BFD-RS may be expected to be in the relationship of quasi-co-location (QCL) with a DMRS of the PDCCH monitored by the UE.

Here, QCL is an indicator indicating statistical properties of a channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (Spatial Rx Parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to a BFD-RS (e.g., the index, resource, number, port number, precoding, and the like of the RS), information related to beam failure detection (BFD) (e.g., the above-described threshold), and the like may be configured (notified) for the UE by using higher layer signaling or the like. The information related to a BFD-RS may be referred to as information related to a resource for BFR.

In the present disclosure, the higher layer signaling may be any one or combinations of RRC (Radio Resource Control) signaling, MAC (Medium Access Control) signaling, broadcast information, and the like, for example.

For example, the MAC signaling may use media access control control elements (MAC CEs (Control Elements), MAC PDUs (Protocol Data Units), and the like. The broadcast information may be, for example, a master information block (MIB), a system information block (SIB), minimum system information (Remaining Minimum System Information (RMSI)), other system information (OSI), or the like.

A higher layer (for example, the MAC layer) of the UE may start a certain timer (which may be referred to as a beam failure detection timer) when a beam failure instance notification is received from the PHY layer of the UE. The MAC layer of the UE may trigger BFR (for example, initiate any of random access procedures to be described later) when a beam failure instance notification is received a certain number of times (e.g., beamFailureInstanceMaxCount configured by RRC) or more before the timer expires.

When the UE makes no notification or when the base station receives a certain signal from the UE (beam recovery request in step S104), the base station may determine that the UE has detected a beam failure.

In step S103, for beam recovery, the UE initiates searching for a new candidate beam to be used for new communication. The UE may select, by measuring a certain RS, a new candidate beam corresponding to the RS. The RS measured in step S103 may be referred to a new candidate RS, an RS for new candidate beam identification (New Candidate Beam Identification RS (NCBI-RS)), a CBI-RS, a CB-RS (Candidate Beam RS), and the like. The NCBI-RS may be the same as or different from a BFD-RS. Note that the new candidate beam may be referred to simply as a candidate beam or a candidate RS.

The UE may determine a beam corresponding to an RS satisfying a certain condition, as a new candidate beam. The UE may determine a new candidate beam, based on an RS(s) having an L1-RSRP exceeding the threshold among configured NCBI-RSs, for example. Note that the criterion (criteria) for determination is not limited to the L1-RSRP. The L1-RSRP related to an SSB may be referred to as an SS-RSRP. The L1-RSRP related to a CSI-RS may be referred to as a CSI-RSRP.

Information related to an NCBI-RS (e.g., the resource, number, port number, precoding, and the like of the RS) and information related to new candidate beam identification (NCBI) (e.g., the above-described threshold) and the like may be configured (notified) for the UE by using higher layer signaling or the like. The information related to a new candidate RS (or an NCBI-RS) may be obtained based on the information related to a BFD-RS. The information related to an NCBI-RS may be referred to as information related to a resource for NBCI.

Note that the BFD-RS, the NCBI-RS, and the like may be interpreted as a radio link monitoring reference signal (Radio Link Monitoring RS (RLM-RS)).

In step S104, the UE that has identified a new candidate beam transmits a beam recovery request (Beam Failure Recovery reQuest (BFRQ)). The beam recovery request may be referred to as a beam recovery request signal, a beam failure recovery request signal, and the like.

The BFRQ may be transmitted by using at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH, for example.

The BFRQ may include information of the new candidate beam / new candidate RS identified in step S103. The resource for the BFRQ may be associated with the new candidate beam. Information of a beam may be notified by using a beam index (BI), a port index of a certain reference signal, an RS index, a resource index (e.g., a CSI-RS resource indicator (CRI), an SSB resource indicator (SSBRI)), and the like.

For Rel-15 NR, CB-BFR (Contention-Based BFR), which is BFR based on a contention-based random access (RA) procedure, and CF-BFR (Contention-Free BFR), which is BFR based on a non-contention-based random access procedure, are studied. In the CB-BFR and the CF-BFR, the UE may transmit a preamble (also referred to as a RA preamble, a random access channel (Physical Random Access Channel (PRACH)), a RACH preamble, and the like) as the BFRQ by using a PRACH resource.

In the CB-BFR, the UE may transmit a preamble randomly selected from one or a plurality of preambles. In contrast, in the CF-BFR, the UE may transmit a preamble assigned by the UE in a UE-specific manner. In the CB-BFR, the base station may assign the same preamble to a plurality of UEs. In the CF-BFR, the base station may assign a preamble in a UE-specific manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both the CB-BFR and the CF-BFR, information related to a PRACH resource (RA preamble) may be notified by higher layer signaling (RRC signaling or the like), for example. For example, the information may include information indicating a correspondence relationship between a detected DL-RS (beam) and a PRACH resource, and a different PRACH resource may be associated with each DL-RS.

In step S105, the base station that has detected the BFRQ transmits a response signal for the BFRQ from the UE (which may be referred to as a gNB response and the like). The response signal may include reconfiguration information for one or a plurality of beams (e.g., configuration information of a DL-RS resource(s)).

The response signal may be transmitted in a UE common search space of a PDCCH, for example. The response signal may be notified by using a PDCCH (DCI) cyclic redundancy check (CRC)-scrambled with an identifier of the UE (e.g., a cell-radio RNTI (C-RNTI)). The UE may determine at least one of a transmit beam and a receive beam to use, based on the beam reconfiguration information.

The UE may monitor the response signal, based on at least one of a control resource set (CORESET) for BFR and a search space set for BFR.

For the CB-BFR, when the UE has received a PDCCH corresponding to the C-RNTI related to the UE itself, it may be determined that contention resolution has been successful.

For the processing in step S105, a period for the UE to monitor a response for the BFRQ from the base station (e.g., the gNB) may be configured. The period may be referred to as a gNB response window, a gNB window, a beam recovery request response window, and the like, for example. When no gNB response is detected in the window period, the UE may retransmit a BFRQ.

In step S106, the UE may transmit a message indicating that the beam reconfiguration is completed, to the base station. The message may be transmitted using a PUCCH or may be transmitted using a PUSCH, for example.

Beam recovery success (BR success) may indicate a case of reaching to S106, for example. In contrast, beam recovery failure (BR failure) may correspond to the number of BFRQ transmission times having reached a certain number or a beam failure recovery timer (Beam-failure-recovery-Timer) having expired, for example.

In Rel. 15, it is supported to perform a beam recovery procedure for a beam failure detected in an SpCell (PCell/PSCell) (e.g., notification of a BFRQ) by using a random access procedure.

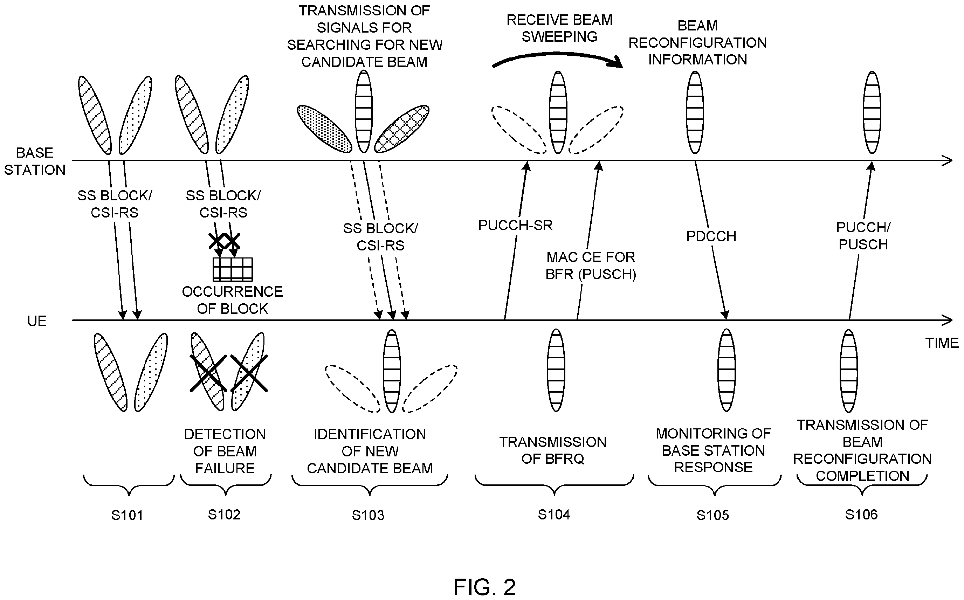

In contrast, in Rel. 16, it is supported to perform a beam recovery procedure for a beam failure detected in an SCell (e.g., notification of a BFRQ (step S104 in FIG. 1)) by using at least one of transmission of a PUCCH for BFR (e.g., a scheduling request (SR)) and transmission of a MAC CE for BFR (e.g., a UL-SCH) (refer to FIG. 2).

For example, the UE may transmit information related to a beam failure by using two MAC-CE-based steps (SR transmission / MAC CE transmission). The information related to a beam failure may include information related to a cell in which the beam failure is detected and information related to a new candidate beam (or a new candidate RS index).

### {Step 1}

When a BF is detected, PUCCH-BFR (scheduling request (SR)) may be transmitted from the UE to an SpCell (e.g., a PCell/PSCell). The PUCCH-BFR may be referred to as a PUCCH-SR, a PUCCH-SR for BFR, a PUCCH for SR, or an SR for BFR.

Subsequently, a UL grant (e.g., DCI) for step 2 below may be transmitted from the PCell/PSCell to the UE. When a MAC CE (or a UL-SCH/PUSCH) for transmitting information related to a new candidate beam is present in a case where a beam failure is detected, step 2 (e.g., MAC CE transmission) may be performed while omitting step 1 (e.g., PUCCH transmission for an SR).

### {Step 2}

The UE may transmit information (e.g., the cell index) related to the cell in which the beam failure is detected (which has a failure) and information related to the new candidate beam to the base station (PCell/PSCell/SCell) via an uplink channel (e.g., a PUSCH) by using a MAC CE. After the BFR procedure is performed, a certain period (e.g., 28 symbols) after a response signal is received from the base station, QCL of a PDCCH/PUCCH/PDSCH/PUSCH may be updated to a new beam.

Note that these step numbers are merely numbers for description, and a plurality of steps may be combined, or the order may be switched. Whether to perform BFR may be configured for the UE by using higher layer signaling.

It is studied to enhance beam management of a UE with a plurality of panels (multi-panel) or beam management using a plurality of transmission/reception points (multi-Transmission/Reception Point (TRP)) in future radio communication systems (e.g., Rel. 17 or later versions, or 5G or later versions).

In beam failure detection / beam failure recovery of Rel. 17 (or Beyond 5G or 6G) or later versions, it is assumed to support a BFRQ framework (e.g., a BFRQ using two steps) based on an SCell BFR BFRQ of Rel. 16. In this case, up to X PUCCH-SR resources (e.g., dedicated PUCCH-SR resource) may be configured in a cell group. X may be one, two, or two or more.

In the present disclosure, the cell group may be, for example, at least one of a master cell group (MCG), a secondary cell group (SCG), and a PUCCH cell group. The MCG and the SCG may be groups configured in dual connectivity (DC). The PUCCH cell group may be a group configured in PUCCH transmission.

In the Rel. 17 or later versions, it is also assumed to perform beam failure detection / beam failure recovery for each of a plurality of TRPs (e.g., per-TRP BFR) in a certain cell. For example, it is also considered to support transmission of a scheduling request (SR) for BFD/BFR per TRP / on a per TRP basis.

### (Examples of Configuration of Resource(s) for SR / PUCCH-SR Resource(s))

A resource for an SR / PUCCH-SR resource (referred to as a PUCCH-SR resource below) may be configured in a certain unit. The certain unit may be, for example, a cell group. The PUCCH-SR resource may be interpreted as a dedicated PUCCH-SR resource, a PUCCH resource for an SR, or an SR-PUCCH resource.

For example, in a cell group (or a cell), up to X PUCCH-SR resources may be configured/supported at maximum. X may be a fixed value (e.g., X = 2) or may correspond to the number of TRPs configured/used. For the configuration of an SR, at least one configuration of SR configurations #0 to #3 below may be supported.

### <SR Configuration #0>

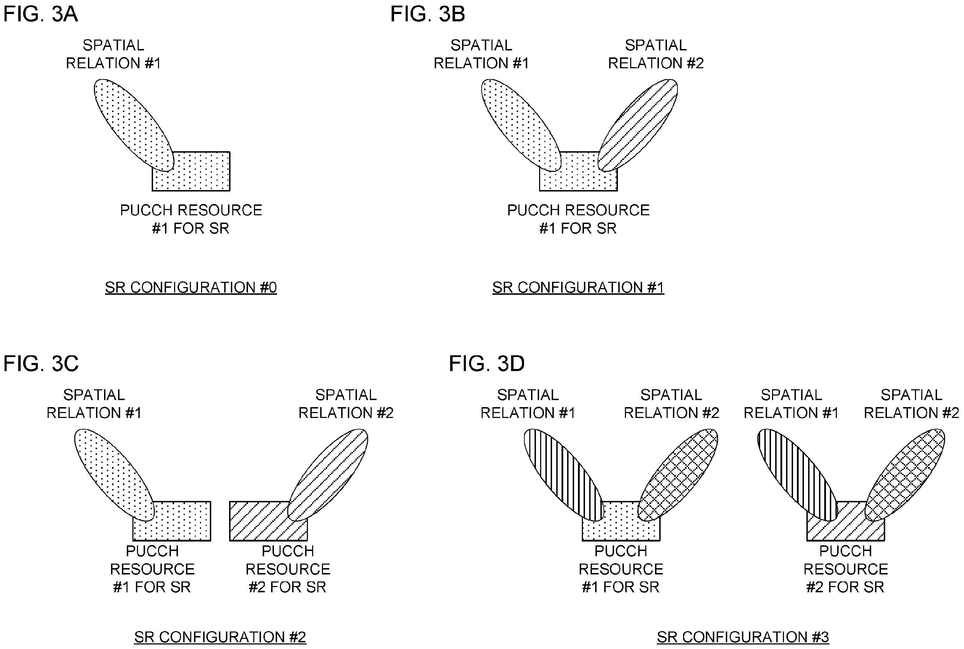

For an SR in a cell group (e.g., an SR index / SchedulingRequestID), X₀ PUCCH resources (or PUCCHs for an SR) may be configured, and for a PUCCH resource, Y₀ spatial relations may be configured. Although X₀ = 1 and Y₀ = 1 are shown here (refer to FIG. 3A), this is not restrictive.

FIG. 3A shows a case where one PUCCH resource for an SR (here, PUCCH resource #1 for an SR) is configured for an SR configured for a cell group (or an SpCell), and one spatial relation (here, spatial relation #1) is configured for the PUCCH resource for an SR. Note that the numbers of X₀ and Y₀ are not limited to these.

For SR configuration 0, a method of configuring an SR for SCell BFR in Rel. 16 may be employed.

### <SR Configuration #1>

For an SR in each cell group (e.g., an SR index / SchedulingRequestID), X₁ PUCCH resources (e.g., dedicated PUCCH-SR resources) may be configured at maximum in the cell group, and for a PUCCH resource, Y₁ spatial relations may be configured. Although X₁ = 1 and Y₁ = 2 are shown here (refer to FIG. 3B), this is not restrictive. The PUCCH resource corresponding to spatial relation #1 and the PUCCH resource corresponding to spatial relation #2 may be associated with respective different TRPs.

FIG. 3B shows a case where one PUCCH resource for an SR (here, PUCCH resource #1 for an SR) is configured for an SR configured for a cell group (or an SpCell), and two spatial relations (here, spatial relations #1 and #2) are configured for the PUCCH resource for an SR. Note that the numbers of X₁ and Y₁ are not limited to these.

### <SR Configuration #2>

For an SR in each cell group (e.g., an SR index / SchedulingRequestID), X₂ PUCCH resources (e.g., dedicated PUCCH-SR resources) are configured at maximum in the cell group, and for each PUCCH resource, Y₂ spatial relations are configured. Although X₂ = 2 (or 2 or more) and Y₂ = 1 are shown here (refer to FIG. 3C), this is not restrictive.

FIG. 3C shows a case where two PUCCH resource for an SR (here, PUCCH resources #1 and #2 for an SR) are configured for an SR configured for a cell group (or an SpCell), and one spatial relation (here, spatial relation #1 or #2) is configured for each PUCCH resource for an SR. FIG. 3C shows a case where PUCCH resource #1 for an SR and PUCCH resource #2 for an SR are configured with respective different spatial relations, but PUCCH resource #1 for an SR and PUCCH resource #2 for an SR may be configured with the same spatial relation. Note that the numbers of X₂ and Y₂ are not limited to these. A plurality of spatial relations may be configured for each PUCCH resource.

### <SR Configuration #3>

For an SR in each cell group (e.g., an SR index / SchedulingRequestID), X₂ PUCCH resources (e.g., dedicated PUCCH-SR resources) are configured at maximum in the cell group, and for each PUCCH resource, Y₂ spatial relations are configured. Although X₂ = 2 (or 2 or more) and Y₂ = 2 are shown here (refer to FIG. 3D), this is not restrictive.

FIG. 3D shows a case where two PUCCH resources for an SR (here, PUCCH resources #1 and #2 for an SR) are configured for an SR configured for a cell group (or an SpCell), and two spatial relations (here, spatial relations #1 and #2) are configured for each PUCCH resource for an SR. FIG. 3D shows a case where PUCCH resource #1 for an SR and PUCCH resource #2 for an SR are configured with the same spatial relation, but PUCCH resource #1 for an SR and PUCCH resource #2 for an SR may be configured with partially or entirely different spatial relations. Note that the numbers of X₂ and Y₂ are not limited to these.

The UE may receive at least one of information related to an SR in a cell group (or a CC/cell) (e.g., an SR index / SchedulingRequestID), information related to a PUCCH resource in a cell group (e.g., a PUCCH-SR resource), and information related to a spatial relation configured in a PUCCH resource (e.g., a spatial relation), from a network (e.g., the base station) by using higher layer signaling / DCI.

The Information related to an SR may be at least one of information indicating a configured SR index (or SchedulingRequestID) and the number of configured SRs. The information related to a PUCCH resource may be at least one of information indicating a PUCCH resource (e.g., a PUCCH resource index) and information indicating the number of configured PUCCH resources. Note that the information related to a PUCCH resource may be the number of PUCCH resources / PUCCH resource index (indices) corresponding to an SR index (indices). The information related to a spatial relation may be at least one of information indicating a spatial relation (e.g., a spatial relation information index) and information indicating the number of configured spatial relations. In the present disclosure, a spatial relation (e.g., spatial relation), a beam, a spatial filter, a spatial domain filter, a TCI state, and QCL may be interpreted interchangeably.

Information related to a unit in which beam failure recovery is applied may be configured for the UE. For example, the UE may receive information related to a configuration of BFR on a per cell basis / on a per TRP basis, for each cell (e.g., each cell included in a cell group), from a network (e.g., the base station) by using higher layer signaling / DCI. The information related to a configuration of BFR on a per cell basis / on a per TRP basis may be information indicating the presence/absence of a configuration of / the presence/absence of application of BFR on a per cell basis / on a per TRP basis. Alternatively, the information related to a configuration of BFR on a per cell basis / on a per TRP basis may be information indicating a BFR type (BFR on a per cell basis / on a per TRP basis, or cell-specific BFR) .

The UE may control transmission of an SR or a PUCCH-SR, based on at least one of the number of SRs (or the number of SR indices) configured for each cell and a BFR type configured/applied for a specific cell included in a cell group (e.g., BFR for each TRP / BFR for each cell). In this case, the UE may control transmission of an SR or a PUCCH-SR, based on at least one of the number of configured PUCCH resources, the number of spatial relations configured for (or corresponding to) the PUCCH resource(s).

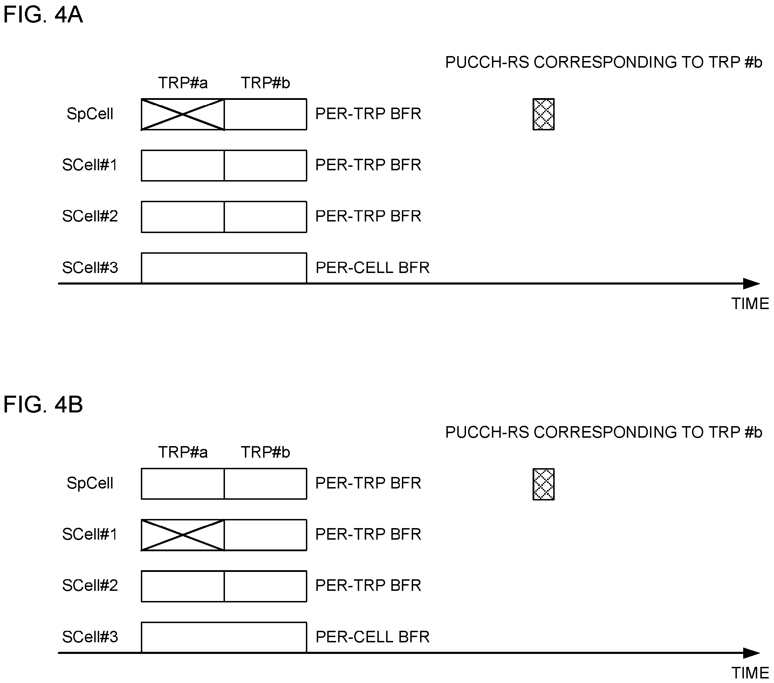

Each PUCCH-SR resource may be used/configured to correspond to a different TRP. When beam failure recovery is triggered as a result of detection of a beam failure, a PUCCH-SR resource may be selected based on the cell in which the beam failure is detected. For example, when the UE has detected a beam failure for a first TRP of the first TRP and a second TRP configured for a certain cell, the UE may transmit an SR (or a PUCCH) by using a PUCCH-SR resource corresponding to the second TRP (refer to FIGS. 4A and 4B) .

FIGS. 4A and 4B each show a case where a BFR SR (also referred to as an SR for BFR) is triggered based on a beam failure of one TRP (e.g., TRP #a) in an SpCell or an SCell in which beam failure detection on a per TRP basis (per-TRP BF) is supported, and a PUCCH resource for an SR is transmitted. The beam failure detection on a per TRP basis (per-TRP BF) may be interpreted as BFR on a per TRP basis (per-TRP BFR).

FIGS. 4A and 4B each show a case where an SpCell and SCell #1 to SCell #3 are included in a certain cell group, BFR on a per TRP basis is configured for each of the SpCell and SCell #1 to SCell #2, and BFR on a per cell basis is configured for SCell #3. FIG. 4A shows a case where, when a beam failure in TRP #a in the SpCell is detected, the UE transmits an SR for BFR by using TRP #b in the SpCell (or a PUCCH resource for an SR corresponding to TRP #b).

FIG. 4B shows a case where, when a beam failure in TRP #a in SCell #1 is detected, the UE transmits an SR for BFR by using TRP #b in the SpCell (or a PUCCH resource for an SR corresponding to TRP #b). Thus, when a plurality of cells are included in a cell group, an SR (or a PUCCH) may be transmitted in a certain cell (e.g., the SpCell / PUCCH SCell) among the plurality of cells.

As described above, in FIGS. 4A and 4B, when a beam failure in a certain TRP is detected in a case where BFR on a per TRP basis is employed, a beam failure recovery request (e.g., an SR for BFR) is transmitted by using a PUCCH resource for an SR corresponding to another TRP.

However, when a plurality (e.g., two) of PUCCH resources for an SR are configured and a plurality of spatial relations are configured for at least one of the plurality of PUCCH resources for an SR (for example, refer to FIG. 3D), how to control transmission of an SR for BFR is a problem. For example, which PUCCH resource for an SR corresponding to which spatial relation is to be selected is a problem.

The inventors of the present invention focused on a spatial relation(s) configured for a PUCCH resource for an SR and came up with the idea of the present embodiment through study of control of transmission of an SR for BFR based on the number of configured spatial relations.

Embodiments according to the present disclosure will be described in detail with reference to the drawings as follows. Aspects may be employed individually, or may be employed in combination.

In the present disclosure, a UE may be a UE that performs transmission/reception with a TRP by using a plurality of panels. Each panel may correspond to a different TRP, one panel may correspond to a plurality of TRPs, or a plurality of panels may correspond to one TRP.

In the present disclosure, a panel(s) (or a panel index (indices)) of the UE may correspond to a specific group. In this case, the UE may assume that beams/RSs of groups are measured in respective panels of the UE. The UE may assume that beams of a plurality of groups are received simultaneously (by using different panels).

In the present disclosure, a TRP may be interpreted as a panel of a TRP (or a base station), an RS group, an antenna port group, a spatial relation group, a QCL group, a TCI state, a TCI state group, a CORESET group, a CORESET pool, and the like, and vice versa. A TRP index may be interpreted as an RS group index, an antenna port group index, a QCL group index, a TCI state index, a TCI state group index, a CORESET group index, a CORESET pool index, and the like, and vice versa.

In the present disclosure, a panel of the UE may be interpreted as an RS group, an antenna port group, a spatial relation group, a QCL group, a TCI state group, a CORESET group, and the like, and vice versa.

In the present disclosure, a panel may be associated with a group index of an SSB/CSI-RS group. In the present disclosure, a panel may be associated with a TRP. In the present disclosure, a plurality of panels may be associated with a group index of an group beam based report. In the present disclosure, a panel may be associated with a group index of an SSB/CSI-RS group for a group beam based report.

In the present disclosure, a serving cell / cell may be interpreted as a PCell, a PSCell, an SpCell, or an SCell. In the following description, a case where two TRPs correspond to a serving cell is used as an example. However, three or more TRPs may correspond to a serving cell.

In the present disclosure, a BFD-RS for which a beam failure is detected, a failed BFD-RS, a TRP in which a beam failure is detected, a failed TRP, a UE panel in which a beam failure is detected, and a failed UE panel may be interpreted interchangeably.

In the present disclosure, A/B may be interpreted as at least one of A and B, or A and B. In the present disclosure, A/B/C may be interpreted as at least one of A, B, and C.

### (First Aspect)

In a first aspect, a case where BFR on a per TRP basis (e.g., per-TRP BFR) is configured in a certain cell and two PUCCH-SR resources are configured at maximum in a cell group will described.

In the present disclosure, a case where BFR on a per TRP basis is configured may be interpreted as a case where a plurality (e.g., two) BFD-RS sets are explicitly/implicitly configured. A cell may be interpreted as a CC, any CC, only an SpCell, or only an SCell.

### <Option 1-1>

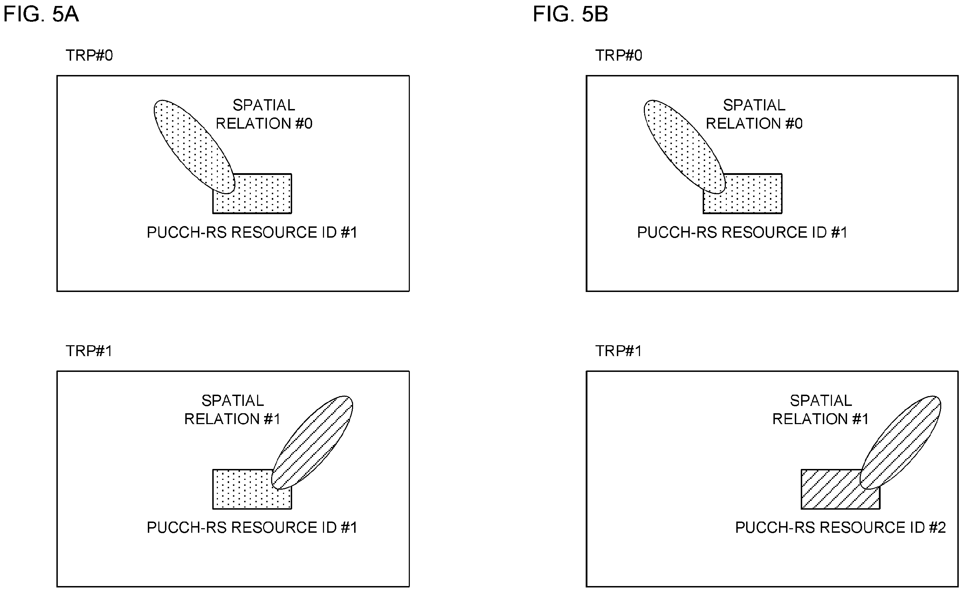

When one PUCCH-SR resource is configured for one cell group, two spatial relations may be configured for one PUCCH-SR (or PUCCH-SR resource). In this case, one spatial relation may be associated with one TRP (refer to FIG. 5A).

In FIG. 5A, a first spatial relation (#0) and a second spatial relation (#1) are configured for one PUCCH-SR resource (ID #1). FIG. 5A shows a case where first spatial relation #0 is associated with first TRP #0 while second spatial relation #1 is associated with second TRP #1.

For example, when a PUCCH-SR is triggered as a result of beam failure detection in first TRP #0, the UE may transmit an SR for BFR by using a spatial relation (here, second spatial relation #1) corresponding to second TRP #1.

### <Option 1-2>

When two PUCCH-SR resources are configured for one cell group, one spatial relation may be configured for each PUCCH-SR (or PUCCH-SR resource). In this case, one PUCCH-SR may be associated with one TRP (refer to FIG. 5B).

In FIG. 5B, two PUCCH-SR resources (first PUCCH-SR resource (ID #1) and second PUCCH-SR resource (ID #2)) are configured. A first spatial relation (#0) is configured for the first PUCCH-SR resource (ID #1), and a second spatial relation (#1) is configured for the second PUCCH-SR resource (ID #2). FIG. 5B shows a case where the first PUCCH-SR resource (ID #1) (or first spatial relation #0) is associated with first TRP #0 while the second PUCCH-SR resource (ID #2) (or second spatial relation #1) is associated with second TRP #1.

For example, when a PUCCH-SR is triggered as a result of beam failure detection in first TRP #0, the UE may transmit an SR for BFR by using second PUCCH-SR resource ID #2 / second spatial relation #1 corresponding to second TRP #1.

Option 1-1 and option 1-2 may both be stipulated/defined, to be switched by notification from the base station (e.g., higher layer signaling). For example, the UE may assume option 1-1 or option 1-2, based on the number of PUCCH-SR resources configured by higher layer signaling. Alternatively, a higher layer parameter indicating switching between option 1-1 and option 1-2 may be supported.

As described above, by configuring associations between TRPs and PUCCH-SR resources / spatial relations, the UE can appropriately select the PUCCH-SR resource / spatial relation corresponding to a TRP different from a TRP in which a beam failure is detected. In this way, beam failure recovery request can be performed appropriately.

### (Second Aspect)

In a second aspect, a case where BFR on a per TRP basis (e.g., per-TRP BFR) is configured in a certain cell and only one PUCCH-SR resource is configured for BFR on a per TRP basis will described.

In this case, at least one of option 2-1 to option 2-3 may be applied.

### <Option 2-1>

A plurality (e.g., two) of spatial relations being configured for a PUCCH-SR resource need not necessarily be supported. In other words, it may be configured that only one spatial relation is configured for a PUCCH-SR resource.

### <Option 2-2>

A plurality (e.g., two) of spatial relations being configured for a PUCCH-SR resource may be supported. In this case, it may be configured that two spatial relations configured for a PUCCH-SR resource are associated with the same TRP.

The two spatial relations may be configured for the purpose of transmission repetition. In other words, the two spatial relations may be used for transmission repetition of a PUCCH-SR resource. When a PUCCH-SR is triggered (or when a beam failure is detected in a certain TRP), the UE may transmit a PUCCH-SR a plurality of times by using different spatial relations. In this case, the UE may apply, similarly to a configured beam mapping pattern, a certain intra-slot/inter-slot repetition rule, to perform transmission repetition in different spatial relations.

### <Option 2-3>

A plurality (e.g., two) of spatial relations being configured for a PUCCH-SR resource may be supported. In this case, it may be configured that two spatial relations configured for a PUCCH-SR resource are associated with different TRPs (refer to FIG. 5A). The two spatial relations may be configured for the purpose of MTRP.

When a PUCCH-SR is triggered (or when a beam failure is detected in a certain TRP), the UE may transmit an SR for BFR by using a spatial relation corresponding to a TRP different from a TRP in which a beam failure is detected (or a PUCCH-SR resource for which the spatial relation is used).

### (Third Aspect)

In a third aspect, a case where BFR on a per TRP basis (e.g., per-TRP BFR) is configured in a certain cell and a plurality (e.g., two) PUCCH-SR resources are configured for BFR on a per TRP basis (or a cell group) will described.

In this case, at least one of option 3-1 to option 3-3 may be applied.

### <Option 3-1>

A plurality (e.g., two) of spatial relations being configured for a PUCCH-SR resource need not necessarily be supported. In other words, it may be configured that only one spatial relation is configured for each PUCCH-SR resource.

In this case, it may be configured that two PUCCH-SR resources may be associated with respective different TRPs. When a PUCCH-SR is triggered (or when a beam failure is detected in a certain TRP), the UE may perform such control as to transmit an SR for BFR by using a PUCCH-SR resource corresponding to a TRP different from a TRP in which a beam failure is detected.

### <Option 3-2>

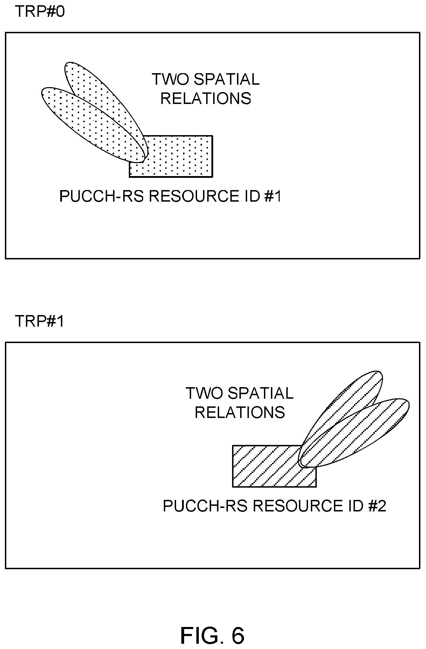

A plurality (e.g., two) of spatial relations being configured for each PUCCH-SR resource may be supported. In this case, it may be configured that two spatial relations configured for each PUCCH-SR resource are associated with the same TRP (refer to FIG. 6) .

FIG. 6 shows a case where first PUCCH-SR resource ID #1 for which two spatial relations are configured and second PUCCH-SR resource ID #2 for which two spatial relations are configured. First PUCCH-SR resource ID #1 and the two spatial relations configured for first PUCCH-SR resource ID #1 are associated with the same TRP (here, TRP #0). Second PUCCH-SR resource ID #2 and the two spatial relations configured for second PUCCH-SR resource ID #2 are associated with the same TRP (here, TRP #1).

The two spatial relations configured for each PUCCH-SR resource may be configured for the purpose of transmission repetition. In other words, the two spatial relations may be used for transmission repetition of each PUCCH-SR resource.

For example, when a PUCCH-SR is triggered as a result of beam failure detection in first TRP #0, the UE may transmit an SR for BFR by using second PUCCH-SR resource ID #2 corresponding to second TRP #1. In this case, the UE may transmit the SR for BFR a plurality of times by using the plurality of spatial relations configured for second PUCCH-SR resource ID #2.

In this case, the UE may apply, similarly to a configured beam mapping pattern (e.g., #1, #2, #1, and #2, or #1, #1, #2, and #2), a certain intra-slot/inter-slot repetition rule, to perform transmission repetition in different spatial relations. For example, when first spatial relation #0 and second spatial relation #1 configured for second PUCCH-SR resource ID #2 correspond to second TRP #1, the UE may use spatial relations (#0, #1, #0, and #1, or #0, #0, #1, and #1) for respective transmission repetitions (e.g., four respective repetitions).

### <<Option 3-2-1>>

Up to one PUCCH-SR resource having two spatial relations being configured at maximum may be supported. In this case, the two spatial relations may be configured to be associated with the same TRP, for the purpose of transmission repetition, for example. The PUCCH-SR resource having two spatial relations (or configured with two spatial relations) may be any PUCCH-SR resource or may be a specific/fixed PUCCH-SR resource. The specific/fixed PUCCH-SR resource may be, for example, a PUCCH-SR resource associated with a certain TRP (e.g., TRP #0).

### <Option 3-3>

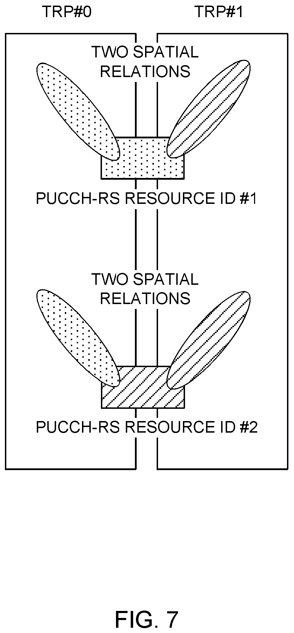

A plurality (e.g., two) of spatial relations being configured for each PUCCH-SR resource may be supported. In this case, it may be configured that two spatial relations configured for each PUCCH-SR resource are associated with different TRPs (refer to FIG. 7). The two spatial relations may be configured for the purpose of MTRP.

FIG. 7 shows a case where first PUCCH-SR resource ID #1 for which two spatial relations are configured and second PUCCH-SR resource ID #2 for which two spatial relations are configured. The two spatial relations configured for first PUCCH-SR resource ID #1 are associated with different TRPs (here, TRP #0 and TRP #1). The two spatial relations configured for second PUCCH-SR resource ID #2 are associated with different TRPs (here, TRP #0 and TRP #1).

The two spatial relations (e.g., spatial relation IDs) configured for first PUCCH-SR resource ID #1 and the two spatial relations configured for second PUCCH-SR resource ID #2 may be configured to be the same or configured to be different from each other.

Each spatial relation may be associated with TRP information (e.g., a CORESET pool index, another RS group ID, or the like). Each PUCCH-SR resource may be directly associated, but need not necessarily be associated, with TRP information. It is only needed that at least the spatial relations configured for each PUCCH (e.g., each PUCCH-SR resource) be associated with TRPs.

When a beam failure is detected (or a PUCCH-SR is triggered), the UE only needs to select one or a plurality of PUCCH-SR resources to be used for transmission of an SR for BFR from among four PUCCH-SR resource / spatial relation candidates. The four PUCCH-SR resource / spatial relation candidates may include, for example, first PUCCH-SR + first spatial relation, first PUCCH-SR + second spatial relation, second PUCCH-SR + first spatial relation, and second PUCCH-SR + second spatial relation.

### <<Option 3-3-1>>

Up to one PUCCH-SR resource having two spatial relations being configured at maximum may be supported. In this case, the two spatial relations may be configured to be associated with different TRPs. The PUCCH-SR resource having two spatial relations (or configured with two spatial relations) may be any PUCCH-SR resource or may be a specific/fixed PUCCH-SR resource. The specific/fixed PUCCH-SR resource may be, for example, a PUCCH-SR resource associated with a certain TRP (e.g., TRP #0).

When a beam failure is detected (or a PUCCH-SR is triggered), the UE only needs to select one or a plurality of PUCCH-SR resources to be used for transmission of an SR for BFR from among three PUCCH-SR resource / spatial relation candidates. The three PUCCH-SR resource / spatial relation candidates may include, for example, first PUCCH-SR + first spatial relation, first PUCCH-SR + second spatial relation, and second PUCCH-SR + first spatial relation. Alternatively, the three PUCCH-SR resource candidates may include, for example, first PUCCH-SR + first spatial relation, second PUCCH-SR + first spatial relation, and second PUCCH-SR + second spatial relation.

### (Fourth Aspect)

In a fourth aspect, UE operation in a case of selecting/determining one or a plurality of PUCCH-SR resources to be used for transmission of an SR for BFR from among a plurality of PUCCH-SR resource / spatial relation candidates (e.g., refer to FIG. 7) (e.g., option 3-3 / option 3-3-1 in the third aspect) will be described.

The UE may select/determine one or a plurality of PUCCH-SR resources to be used for transmission of an SR for BFR from among the plurality of PUCCH-SR resource / spatial relation candidates, based on a certain condition. The certain condition may be, for example, at least one of a TRP in which a beam failure is detected (e.g., a failed TRP), a TRP in which no beam failure is detected (e.g., a non-failed TRP), fixed TRP information (e.g., fixed TRP info), a PUCCH resource ID (or a PUCCH-SR resource ID), and a spatial relation information ID (e.g., a Spatial relation info ID) .

The UE may apply at least one of option 4-1 to option 4-3.

### <Option 4-1>

When a beam failure is detected (or a PUCCH-SR is triggered), the UE may select one of three or four PUCCH-SR resource / spatial relation candidates, to use the selected PUCCH-SR resource / spatial relation for transmission of an SR for BFR.

When one TRP beam failure is detected in an SCell/SpCell and an SR is triggered, a selected PUCCH-SR resource / spatial relation (e.g., PUCCH-spatialrelation) may be determined based on at least one of selection rule 4-1-1 to selection rule 4-1-4 below.

### <<Selection Rule 4-1-1>>

A PUCCH (e.g., a PUCCH-SR resource) associated with a TRP in which no beam failure has occurred (e.g., a non-failed TRP) is selected first, and then a spatial relation related to the TRP in which no beam failure has occurred is selected.

### <<Selection Rule 4-1-2>>

A spatial relation related to a TRP in which no beam failure has occurred (e.g., a non-failed TRP) is selected from among spatial relations configured for two PUCCH-SR resources, and then a PUCCH (e.g., a PUCCH-SR resource) related to the TRP in which no beam failure has occurred is selected.

### <<Selection Rule 4-1-3>>

The smallest (or largest) PUCCH-SR resource ID is selected first, and then a spatial relation related to the TRP in which no beam failure has occurred is selected. Even when the PUCCH-SR resource is not directly related to the TRP, the PUCCH-SR resource can be selected.

### <<Selection Rule 4-1-4>>

The smallest (or largest) spatial relation ID is selected from among spatial relations configured for two PUCCH-SR resources, and then a PUCCH (e.g., a PUCCH-SR resource) related to a TRP in which no beam failure has occurred is selected.

By employing at least one of selection rule 4-1-1 to selection rule 4-1-4, it is possible to appropriately determine a PUCCH-SR resource / spatial relation to be used for transmission of an SR for BFR even when a plurality of spatial relations are configured for at least one of a plurality of PUCCH-SR resources (or a plurality of PUCCH-SR resource / spatial relation candidates are present).

When a beam failure is detected in each of two TRPs when BFR on a per TRP basis is configured, or when a beam failure of a cell is detected when BFR on a per cell basis is configured, in an SCell, the UE may transmit an SR for BFR by using a default PUCCH-SR resource / spatial relation. The default PUCCH-SR resource / spatial relation may be determined according to selection rule 4-1-5 / selection rule 4-1-6.

### <<Selection Rule 4-1-5>>

The smallest (or largest) PUCCH-SR resource ID is selected first, and then the smallest (or largest) spatial relation ID is selected.

### <<Selection Rule 4-1-6>>

The smallest (or largest) spatial relation ID is selected from among spatial relations configured for two PUCCH-SR resources, and then the smallest (or largest) PUCCH-SR resource ID is selected.

By employing at least one of selection rule 4-1-5 and selection rule 4-1-6, it is possible to appropriately determine a PUCCH-SR resource / spatial relation to be used for transmission of an SR for BFR even when a beam failure is detected in each of a plurality of TRPs.

### <Option 4-2>

When a beam failure is detected (or a PUCCH-SR is triggered), the UE may select two of three or four PUCCH-SR resource / spatial relation candidates to use the selected PUCCH-SR resources / spatial relations for transmission of an SR for BFR. It may be configured that two PUCCH-SR resources / spatial relations are associated with the same TRP.

For example, when a beam failure is detected in one TRP and an SR is triggered in an SCell/SpCell, the UE may select a spatial relation related to a TRP in which no beam failure is detected from among the PUCCH-SR resources / spatial relations (e.g., PUCCH-spatialrelation) for each PUCCH resource, and use the selected spatial relation to transmission of an SR for BFR.

Alternatively, when a beam failure is detected in each of two TRPs when BFR on a per TRP basis is configured, or when a beam failure of a cell is detected when BFR on a per cell basis is configured, in an SCell, the UE may select spatial relations associated with the same TRP (e.g., the lowest TRP ID) from among the PUCCH-SRs / spatial relations (e.g., PUCCH-spatialrelation) for each PUCCH resource, to use the selected spatial relations for transmission of an SR for BFR.

### <Option 4-3>

When a beam failure is detected (or a PUCCH-SR is triggered), the UE may select two of three or four PUCCH-SR resource / spatial relation candidates to use the selected PUCCH-SR resources / spatial relations for transmission of an SR for BFR. It may be configured that the two selected PUCCH-SR resources / spatial relations are associated with different TRPs.

For example, when a beam failure is detected in one TRP and an SR is triggered in an SCell/SpCell, the UE may select spatial relations related to different TRPs from among the PUCCH-SR resources / spatial relations (e.g., PUCCH-spatialrelation) for each PUCCH resource, and use the selected spatial relations for transmission of an SR for BFR.

Alternatively, when a beam failure is detected in each of two TRPs when BFR on a per TRP basis is configured, or when a beam failure of a cell is detected when BFR on a per cell basis is configured, in an SCell, the UE may select spatial relations associated with different TRPs from among the PUCCH-SRs / spatial relations (e.g., PUCCH-spatialrelation) for each PUCCH resource, to use the selected spatial relations for transmission of an SR for BFR.

### (UE Capability Information)

In the first aspect to fourth aspect above, the following UE capabilities may be configured. Note that the following UE capabilities may each be interpreted as a parameter (e.g., a higher layer parameter) configured for the UE by a network (e.g., the base station).

For BFR on a per TRP basis, UE capability information related to whether to support two spatial relations being configured for each PUCCH-SR resource for BFR may be defined.

When two PUCCH-SR resources are configured for BFR on a per TRP basis, UE capability information related to whether to support two spatial relations being configured for each PUCCH-SR resource may be defined.

When one PUCCH-SR resource is configured for BFR on a per TRP basis, UE capability information related to whether to support two spatial relations being configured for the PUCCH-SR resource may be defined.

When it is supported that two spatial relations are configured for a PUCCH-SR resource, UE capability information related to whether to support two spatial relations related to the same TRP or two spatial relations related to different TRPs may further be defined.

It may be configured that the first aspect to the fourth aspect are applied to a UE that supports/reports at least one of the UE capabilities described above. Alternatively, it may be configured that the first aspect to the fourth aspect are applied to a UE configured by a network.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

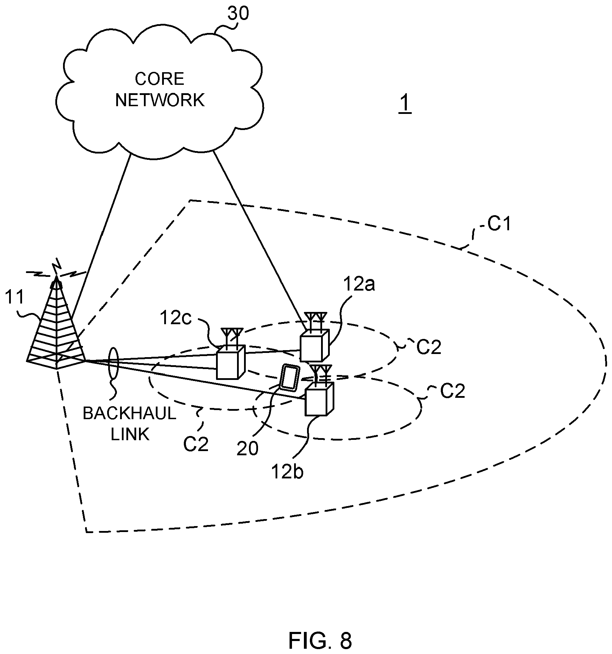

FIG. 8 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

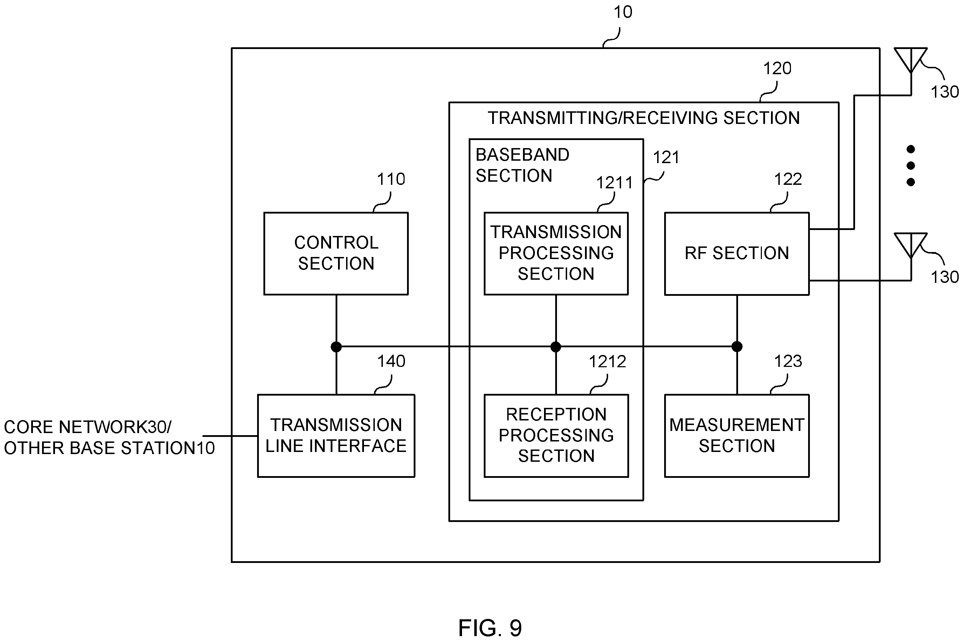

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, to a terminal, information related to the number of uplink control channel resources for a scheduling request (SR) to be used for a beam failure recovery request.

The control section 110 may control reception of an SR transmitted by using an uplink control channel resource for the SR determined based on the information related to the number of uplink control channel resources for the scheduling request (SR) to be used for the beam failure recovery request and a spatial relation corresponding to the uplink control channel resource for the SR.

### (User Terminal)

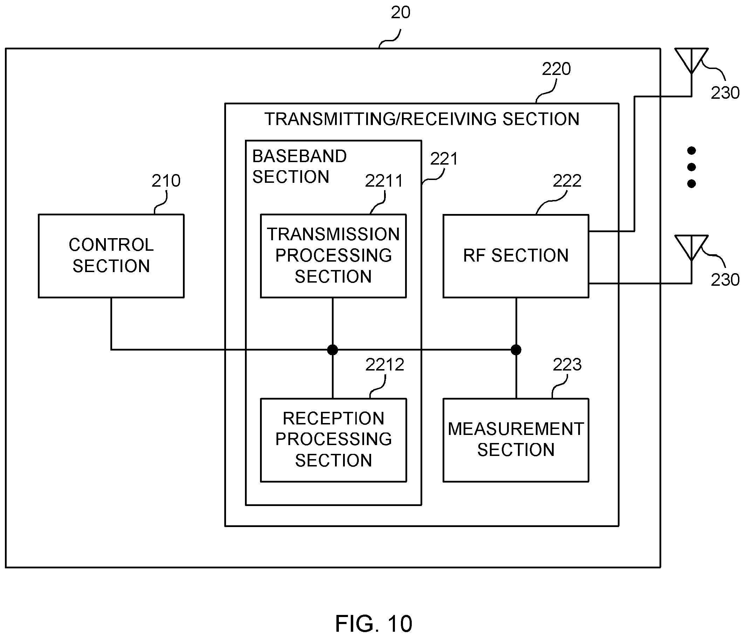

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to the number of uplink control channel resources for a scheduling request (SR) to be used for a beam failure recovery request.

The control section 210 may determine an uplink control channel resource for the SR to be used for the beam failure recovery request, based on the information related to the number of uplink control channel resources for the scheduling request (SR) to be used for the beam failure recovery request and a spatial relation corresponding to the uplink control channel resource for the SR.

When two spatial relations are configured for the uplink control channel resource for the SR, the two spatial relations may correspond to the same transmission/reception point.

When two spatial relations are configured for the uplink control channel resource for the SR, the two spatial relations may correspond to different transmission/reception points.

When two of the uplink control channel resources for the SR are configured and two spatial relations are configured for each of the uplink control channel resources for the SR, the control section 210 may use a specific spatial relation corresponding to a specific uplink control channel resource to perform the beam failure recovery request.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

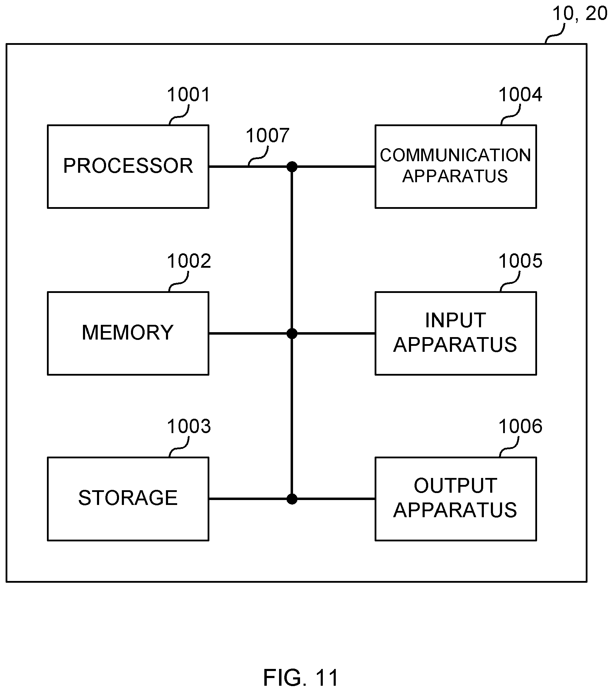

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, media access control control elements (MAC Control Elements (CEs)).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "reference signal (RS) port group," a "layer," the "number of layers," a "rank," a "resource," a "resource set," a "resource group," a "beam," a "beam width," a "beam angular degree," an "antenna," an "antenna element," a "panel," a "transmission/reception point," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced/changed/updated based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2021-068792 filed on April 15, 2021. The entire content of the application is incorporated herein.

## Claims

1. A terminal comprising:
a receiving section that receives information related to the number of uplink control channel resources for a scheduling request (SR) to be used for a beam failure recovery request; and
a control section that determines an uplink control channel resource for the SR to be used for the beam failure recovery request, based on the information and a spatial relation corresponding to the uplink control channel resource for the SR.

2. The terminal according to claim 1, wherein
when two spatial relations are configured for the uplink control channel resource for the SR, the two spatial relations correspond to a same transmission/reception point.

3. The terminal according to claim 1, wherein
when two spatial relations are configured for the uplink control channel resource for the SR, the two spatial relations correspond to different transmission/reception points.

4. The terminal according to claim 1, wherein
when two of the uplink control channel resources for the SR are configured and two spatial relations are configured for each of the uplink control channel resources for the SR, the control section uses a specific spatial relation corresponding to a specific uplink control channel resource to perform the beam failure recovery request.

5. A radio communication method for a terminal, the radio communication method comprising:
receiving information related to the number of uplink control channel resources for a scheduling request (SR) to be used for a beam failure recovery request; and
determining an uplink control channel resource for the SR to be used for the beam failure recovery request, based on the information and a spatial relation corresponding to the uplink control channel resource for the SR.

6. A base station comprising:
a transmitting section that transmits, to a terminal, information related to the number of uplink control channel resources for a scheduling request (SR) to be used for a beam failure recovery request; and
a control section that controls reception of an SR transmitted by using an uplink control channel resource for the SR determined based on the information and a spatial relation corresponding to the uplink control channel resource for the SR.
